# FASCICULE DE BREVET EUROPEEN

(11) **EP 0 530 115 B1**
(45) Date de publication et mention de la délivrance du brevet: **19.04.1995**
(21) Numéro de dépôt: 92420268.2
(22) Date de dépôt: 05.08.1992
(51) Int. Cl.: H01G 2/14

(54) **Condensateur basse tension auto-protégé à enrobage de résine**
Kunststoffumhüllte selbst-geschützte Niederspannungskondensator
Resin-encapsulated low-tension capacitor with self-protection

(30) Priorité: 22.08.1991 FR 9110652
(43) Date de publication de la demande: 03.03.1993
(73) Titulaire: ALPES TECHNOLOGIES (société anonyme), F-74940 Annecy le Vieux (FR)
(72) Inventeur: Masset, Daniel, F-74290 Menthon Saint Bernard (FR)
(74) Mandataire: Poncet, Jean-François

(56) Documents cités:
- EP-A- 0 356 348

## Description

La présente invention concerne les condensateurs de puissance basse tension généralement utilisés pour la correction du facteur de puissance dans la distribution électrique basse tension.

On connaît déjà de tels condensateurs de puissance basse tension constitués d'un ou plusieurs éléments condensateurs, chaque élément comportant un enroulement cylindrique de couches isolantes et de couches conductrices de l'électricité formant une première et une seconde électrode de type auto-cicatrisant isolées l'une de l'autre. En pratique, un élément condensateur est réalisé par l'enroulement de films plastiques métallisés, et le condensateur consiste en un assemblage d'éléments bobinés, connectés selon un arrangement série et/ou parallèle en fonction de la puissance désirée.

Le condensateur est dit auto-cicatrisant lorsque la présence de défauts mineurs dans le film diélectrique entraîne un claquage localisé qui conduit à l'évaporation des électrodes au voisinage du défaut, sans dommages pour le film adjacent. Lors de sollications anormales, notamment de surtensions ou d'élévations de température, un claquage diélectrique peut devenir non auto-cicatrisant, c'est-à-dire trop important pour permettre l'auto-cicatrisation du condensateur. L'augmentation résultante du courant qui traverse l'élément provoque une évolution de température au voisinage du défaut et une production de gaz de décomposition du film plastique. L'élément étant généralement disposé dans un boîtier étanche, le boîtier peut éclater sous l'effet de la pression produite par le gaz.

Pour éviter les risques d'explosion, plusieurs solutions ont été proposées dans le passé. Une première solution consiste à placer les éléments dans des boîtiers métalliques étanches imprégnés avec des huiles diélectriques. Sous l'effet des gaz, le boîtier se déforme et provoque l'arrachement de connexions qui relient le condensateur au réseau électrique. Aucun risque d'explosion n'est alors susceptible de se produire car aucun réamorçage n'est possible dans de l'huile. Une telle solution présente toutefois de nombreux inconvénients : elle nécessite d'utiliser de grandes quantités d'huile, ce qui augmente les risques d'incendie ; un seul défaut provoque la mise hors service de l'ensemble du condensateur. D'autre part, l'utilisation de l'huile en tant que diélectrique susceptible d'empêcher les réamorçages électriques s'avère peu adaptée à une solution dans laquelle l'élément de condensateur est noyé dans une résine formant un enrobage complet. Il apparaît en effet difficile de maintenir l'huile en forme et en place avant et pendant formation de l'enrobage en résine. On est donc conduit à préférer les condensateurs dits "secs".

Une seconde solution consiste à introduire chaque élément dans un pot métallique ou plastique individuel, le tout étant enrobé de résine bi-composant. L'augmentation de pression provoque alors une déformation du boîtier, et l'on prévoit un couvercle déformable ou éjectable sous l'effet de la pression, cette déformation ou éjection arrachant un fil de connexion de l'élément pour assurer sa déconnexion électrique. La protection ainsi obtenue est efficace pour les faibles surintensités, mais elle présente l'inconvénient d'une possibilité de réamorçage quand la déconnexion a lieu avec des courants de court-circuit importants. Un tel réamorçage provoque l'ouverture ou l'explosion du boîtier, avec des risques d'incendie ou tout au moins un fort dégagement de fumées endommageant les équipements voisins.

Le brevet FR-A-2 598 024 décrit une troisième solution dans laquelle on introduit chaque élément dans un pot plastique et on utilise la déformation d'une membrane qui provoque la fermeture d'un contact court-circuiteur mettant en court-circuit franc l'élément du condensateur. On provoque alors le fonctionnement d'un appareil de protection disposé en amont dans le circuit électrique, par exemple un disjoncteur ou un fusible, éliminant le court-circuit. Une telle solution nécessite de prévoir des pièces en mouvement relativement nombreuses, ce qui augmente sensiblement le coût de production d'un tel condensateur. D'autre part, la durée de vie d'un tel condensateur se trouve limitée par le fait que la protection mécanique externe des éléments est très faible.

Le brevet EP-A-0 356 348 décrit une autre solution dans laquelle chaque élément de condensateur est noyé dans une résine, et comprend une membrane déformable placée au voisinage immédiat d'une face d'extrémité d'un élément à enroulement cylindrique axial de deux électrodes de type auto-cicatrisant isolées l'une de l'autre. La membrane déformable peut se déformer et se déplacer axialement sous l'action de la pression des gaz produits par la décomposition d'une portion de l'élément à enroulement cylindrique en cas de claquage non auto-cicatrisant. La membrane déformable est reliée mécaniquement à une portion intermédiaire d'un premier conducteur d'entrée connecté électriquement à une première électrode, la membrane déformable provoquant ainsi le déplacement de ladite portion intermédiaire de conducteur lors de la déformation de la membrane. Une partie cassable de conducteur est tendue entre un point fixe disposé à l'intérieur de l'élément et la portion intermédiaire de conducteur reliée mécaniquement à la membrane déformable. Le dégagement des gaz, en repoussant la membrane déformable, produit ainsi la rupture de la partie cassable de conducteur d'entrée. Ladite partie cassable de conducteur d'entrée est logée dans un compartiment empli d'un diélectrique pâteux, évitant le réamorçage électrique après rupture de la partie cassable. Une certaine quantité de diélectrique pâteux est également logée entre la membrane déformable et la face d'extrémité correspondante de l'élément à enroulement cylindrique. La portion intermédiaire de conducteur est reliée à la première électrode par un conducteur radial formé d'un fil fusible. La présence de ce conducteur radial formé d'un fil fusible augmente la résistance série du condensateur, et entraîne des pertes calorifiques non négligeables. D'autres part, la présence de ce fil, noyé dans un diélectrique pâteux, entraîne des risques de ruptures intempestives lors de surintensités importantes résultant d'une surtension ou de la mise sous tension du condensateur. Il en résulte qu'une telle structure de condensateur n'est pas adaptée pour passer des courants très intenses, tels que les courants transitoires se développant dans les circuits électroniques de puissance. Egalement, cette structure n'est pas très aisée à fabriquer, car la présence du diélectrique pâteux sur la face d'extrémité de l'élément ne facilite pas le maintien de l'élément lors du surmoulage par la résine. En outre, dans cette structure, la membrane déformable est très proche de l'élément de condensateur, de sorte que les gaz chauds dégagés par des claquages non auto-cicatrisants risquent de perforer la membrane déformable et de réduire ou d'annuler son efficacité. Ce document préconise en outre d'utiliser un diélectrique pâteux pour noyer le conducteur radial entre la membrane déformable et la face d'extrémité de l'élément de condensateur. Il en résulte qu'il est nécessaire d'utiliser une quantité relativement importante de diélectrique pâteux, qui est un produit onéreux.

Le problème proposé par la présente invention est de supprimer les défauts éventuels de fonctionnement de la structure de membrane déformable, en évitant simultanément de recourir à des quantités importantes de diélectrique pâteux. On augmente ainsi la fiabilité de l'élément de condensateur, tout en réduisant son coût de fabrication.

Un autre objet de l'invention est de faciliter la fabrication de l'élément de condensateur, permettant notamment le maintien de la bobine pendant la coulée ou le surmoulage par la résine. Il est ainsi possible de mouler l'élément de condensateur en une seule fois, l'élément de condensateur étant disposé selon un axe sensiblement horizontal, permettant un moulage, à l'aide d'un seul moule, d'une grande d'ensembles de condensateurs pouvant comporter un nombre d'éléments différent.

Un autre objet de l'invention est de concevoir une telle structure de condensateur pouvant supporter, sans dégradation, des chocs électriques importants, rendant son utilisation possible dans les circuits électroniques de puissance.

La solution selon l'invention consiste à prévoir des moyens pour canaliser les gaz chauds produits par les claquages localisés non auto-cicatrisants, et pour protéger la membrane déformable contre le jet de gaz chauds.

Ainsi, pour atteindre ces objets ainsi que d'autres, le condensateur selon la présente invention comprend au moins un élément à enroulement cylindrique axial de couches Isolantes et de couches conductrices de l'électricité formant une première et une seconde électrodes de type auto-cicatrisant isolées l'une de l'autre ; la première électrode est connectée électriquement à un premier conducteur d'entrée du condensateur ; la seconde électrode est connectée électriquement à un second conducteur d'entrée du condensateur. L'élément à enroulement cylindrique est inséré dans une enceinte étanche, les conducteurs d'entrée traversant de manière étanche la paroi de l'enceinte. Une membrane déformable transversale divise l'espace intérieur de l'enceinte en deux compartiments. Un premier compartiment contient l'élément à enroulement cylindrique d'électrodes, un second compartiment contient un gaz tel que l'air. La membrane déformable est susceptible de se déformer et de se déplacer axialement sous l'action de la pression des gaz produits par la décomposition d'une portion de l'élément à enroulement cylindrique en cas de claquage non auto-cicatrisant ; la membrane déformable est reliée mécaniquement à une portion intermédiaire du premier conducteur d'entrée pour provoquer le déplacement de ladite portion intermédiaire du conducteur lors de la déformation de la membrane ; une partie cassable du premier conducteur d'entrée est tendue entre un point fixe disposé à l'intérieur du premier compartiment et la portion intermédiaire de conducteur reliée mécaniquement à la membrane déformable, de sorte que la déformation de membrane produit une tension de la partie cassable de conducteur d'entrée, ladite partie cassable présentant une résistance mécanique limitée telle qu'elle se rompt sous l'action d'une tension supérieure à un seuil de traction déterminé. La partie cassable de conducteur d'entrée est logée dans un compartiment empli d'un diélectrique pâteux évitant le réamorçage électrique après rupture de la partie cassable ; la membrane déformable est disposée à l'écart dudit élément à enroulement cylindrique d'électrodes, en appui sur la première face d'une paroi isolante solide solidaire de ladite enceinte étanche et munie d'une cheminée axiale cylindrique, la seconde face de ladite paroi isolante solide étant en appui sur une face d'extrémité dudit élément à enroulement cylindrique d'électrodes. La membrane déformable est reliée mécaniquement à ladite portion intermédiaire de premier conducteur d'entrée par une tige axiale cylindrique coulissant à faible jeu dans ladite cheminée axiale cylindrique ; ladite tige axiale cylindrique a une longueur au moins égale à celle de ladite cheminée axiale cylindrique ; ladite portion intermédiaire de premier conducteur d'entrée est reliée à ladite première électrode par une portion radiale souple du premier conducteur d'entrée, de sorte que les gaz produits par la décomposition d'une portion de l'élément à enroulement cylindrique lors d'un claquage non auto-cicatrisant s'échappent en longeant les bords de l'élément à enroulement cylindrique, s'écoulent entre ladite face d'extrémité de l'élément à enroulement cylindrique et la seconde face de ladite paroi isolante solide, traversent la cheminée axiale cylindrique autour de ladite tige axiale cylindrique et s'accumulent entre la première face de paroi isolante solide et la membrane déformable en repoussant ladite membrane déformable à l'écart de l'élément à enroulement cylindrique.

Selon une réalisation préférée, la membrane déformable est réalisée en une matière plastique flexible. Pour assurer sa protection, la tige cylindrique axiale est métallique, et elle est solidaire d'un moyen déflecteur, disposé entre la sortie de la cheminée cylindrique axiale et la membrane déformable, pour diriger radialement et à l'écart de la zone centrale de membrane déformable les gaz chauds issus du claquage non auto-cicatrisant.

Selon un mode de réalisation avantageux, la portion radiale souple du premier conducteur d'entrée comprend au moins une lame conductrice flexible de forte section logée à l'interface entre la membrane déformable et la première face de paroi isolante solide. La portion radiale souple du premier conducteur d'entrée se raccorde par sa première extrémité à la tige axiale cylindrique métallique, et par sa seconde extrémité à une demi-boucle de liaison avec une soudure excentrée de connexion à la première électrode.

D'autres objets, caractéristiques et avantages de la présente Invention ressortiront de la description suivante de modes de réalisation particuliers, faite en relation avec les figures jointes, parmi lesquelles :
- la figure 1 représente une vue schématique en coupe axiale d'un élément de condensateur selon l'invention en position normale de fonctionnement ;
- la figure 2 est une vue en coupe axiale à plus grande échelle de la zone centrale de membrane déformable et de partie cassable de conducteur de l'élément de la figure 1 ;
- la figure 3 représente une autre forme de réalisation de partie cassable de conducteur ;
- la figure 4 est une vue analogue à celle de la figure 1, montrant l'élément après une surpression interne ayant conduit à l'ouverture du circuit électrique ; et
- la figure 5 illustre en coupe axiale un autre mode de réalisation d'élément de condensateur selon l'invention.

Comme le représentent les figures, un élément de condensateur selon la présente invention comprend au moins un élément 1 à enroulement cylindrique axial de couches Isolantes et de couches conductrices de l'électricité formant une première et une seconde électrodes de type auto-cicatrisant Isolées l'une de l'autre. La première électrode est connectée électriquement à un premier conducteur d'entrée 2 du condensateur. La seconde électrode est connectée électriquement à un second conducteur d'entrée 3 du condensateur.

L'élément 1 à enroulement cylindrique présente un axe longitudinal I-I, une première face d'extrémité 4, une seconde face d'extrémité 5, une face latérale cylindrique 6, et un canal axial traversant 7.

La première électrode est reliée au premier conducteur 2 par une première soudure 8 disposée en zone périphérique de la première face d'extrémité 4 de l'élément cylindrique 1. La première soudure 8 est connectée électriquement à une portion radiale souple 9 de premier conducteur d'entrée elle-même connectée électriquement à une portion intermédiaire 160 de conducteur d'entrée. Une partie cassable 11 de conducteur d'entrée est tendue entre un point fixe, formé par l'extrémité 12 d'un conducteur axial 13 de forte section traversant le canal 7, et la portion intermédiaire 160 de conducteur d'entrée.

Une membrane déformable 14 transversale est placée en regard et à l'écart de la première face d'extrémité 4 de l'élément 1 à enroulement cylindrique, de laquelle elle est écartée selon une distance prédéterminée. La partie centrale de la membrane 14 est mécaniquement solidaire de la portion intermédiaire 160 de conducteur d'entrée. La partie cassable 11 de conducteur d'entrée se trouve ainsi tendue entre l'extrémité 12 fixe du conducteur 13 et la membrane 14.

La membrane déformable 14 est maintenue à l'écart de la première face d'extrémité 4 de l'élément 1 à enroulement cylindrique par une paroi isolante solide 30 munie d'une cheminée axiale cylindrique 31. La membrane déformable 14 est ainsi en appui sur la première face 32 de la paroi isolante solide 30. La seconde face 33 de ladite paroi isolante solide 30 est en appui sur la première face d'extrémité 4 de l'élément 1 à enroulement cylindrique.

La membrane déformable 14 est reliée mécaniquement à la portion intermédiaire 160 de premier conducteur d'entrée par une tige axiale cylindrique 34 coulissant longitudinalement à faible jeu dans ladite cheminée axiale cylindrique 31. Ainsi, la partie cassable 11 de conducteur d'entrée est solidarisée par sa seconde extrémité à l'extrémité libre de la tige axiale cylindrique 34. La tige axiale cylindrique 34 a une longueur au moins égale à celle de ladite cheminée axiale cylindrique 31.

La membrane 14 est solidarisée à sa périphérie à une seconde membrane 17 formant avec elle une capsule étanche et définissant un compartiment 18 enfermant un gaz tel que l'air. L'épaisseur de la capsule 14, 17, 18 est suffisante pour autoriser une déformation de membrane déformable 14 telle qu'elle assure la rupture de la partie cassable 11 de conducteur d'entrée.

Les membranes 14 et 17 peuvent, par exemple, être réalisées en chlorure de polyvinyle.

Le canal 7 axial, traversé par le conducteur axial 13, comporte un tube isolant 19, et une pièce d'extrémité 20. La pièce d'extrémité 20 comprend un corps tubulaire axial se terminant vers l'intérieur du canal 7 axial par un rétrécissement 21 destiné à retenir l'extrémité 12 du conducteur 13 axial. L'extrémité 12 de ce conducteur est avantageusement formée en boule, comme le représente la figure, ladite boule venant reposer dans le fond du rétrécissement 21. L'autre extrémité de la pièce d'extrémité 20 comporte une collerette 22 venant en appui sur la première face d'extrémité 4 de l'élément 1 à enroulement cylindrique. Une traction axiale du premier conducteur 2 vers le bas dans le sens représenté sur la figure applique la première extrémité 12 dans le fond du rétrécissement 21, et applique la collerette 22 contre la première face d'extrémité 4 de l'élément 1.

Le rétrécissement 21 de la pièce d'extrémité 20, et l'extrémité 12 du conducteur axial 13, occupent une position intermédiaire dans le canal 7. De préférence, ces éléments sont disposés à une distance de un demi à deux centimètres à partir de la première face d'extrémité 4 de l'élément 1. Il en résulte que la longueur de portion cassable 11 de conducteur d'entrée est de 0,5 à 2 centimètres.

L'espace intérieur de la pièce d'extrémité 20 est rempli d'un diélectrique pâteux 25 tel qu'une graisse au silicone. On peut, par exemple, utiliser une graisse vendue sous la référence RHODERFIL PATE 4 par la société française RHODERFIL SILICONE. Il en résulte que la graisse au silicone enrobe la partie cassable 11 du conducteur d'entrée.

Le second conducteur 3 est relié à la seconde électrode par une soudure 23 réalisée sur la deuxième face d'extrémité 5 de l'élément 1.

L'ensemble formé par la capsule 14, 17, 18 et l'élément 1 à enroulement cylindrique est noyé sous vide dans une résine diélectrique durcissable formant la paroi 24 de l'enceinte et enfermant la totalité de l'élément de condensateur. Ainsi, la résine de paroi 24 vient en appui contre la seconde face d'extrémité 5, contre la face latérale 6 de l'élément 1 à enroulement cylindrique, et contre la seconde membrane 17 de la capsule 14, 17, 18.

La résine de paroi d'enceinte 24 peut, par exemple, être une résine diélectrique telle qu'une résine polyuréthanne chargée.

La paroi isolante solide 30 est solidaire de la paroi 24 de l'enceinte. De préférence, la paroi isolante solide 30 est constituée par la même résine que celle formant la paroi 24 de l'enceinte, et peut ainsi être réalisée simultanément avec la paroi 24, sans discontinuité.

La tige axiale cylindrique 34 présente un diamètre supérieur au diamètre du canal axial 7. Avant claquage non auto-cicatrisant, la tige axiale cylindrique 34 porte par son extrémité libre directement contre la première face d'extrémité 4 de l'élément 1 à enroulement cylindrique, ou indirectement avec interposition de la collerette 22 de la pièce d'extrémité 20.

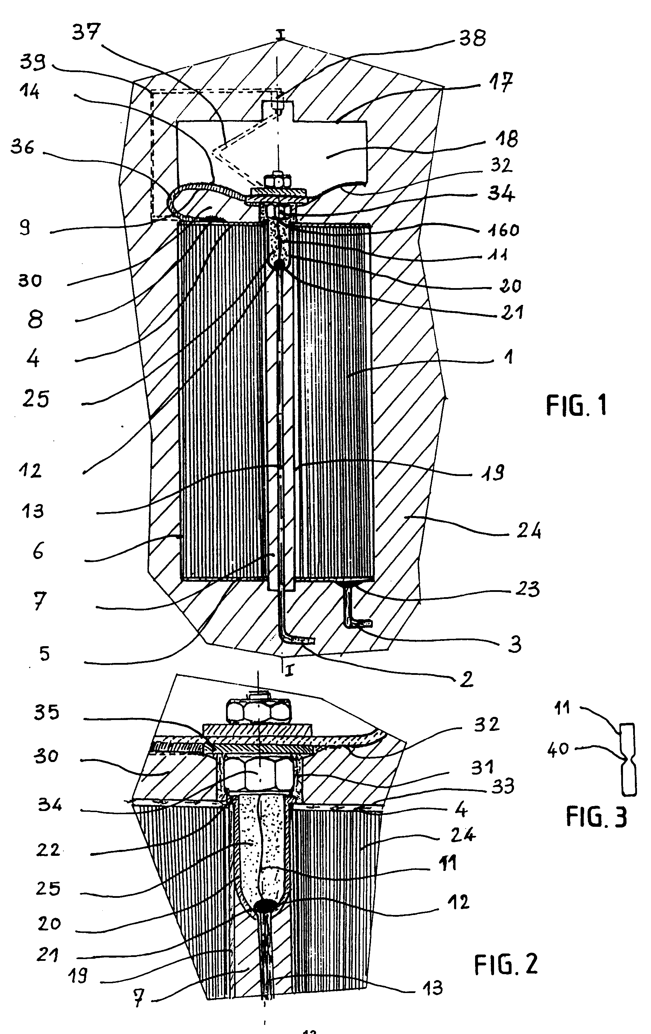

Dans le mode de réalisation dans lequel la membrane déformable 14 est réalisée en une matière plastique telle que le chlorure de polyvinyle, il est nécessaire d'éviter sa dégradation éventuelle par les gaz chauds provenant du claquage localisé non auto-cicatrisant. Dans ce cas, la tige axiale cylindrique 34 est solidaire d'un moyen déflecteur 35 disposé entre la sortie de la cheminée cylindrique axiale 31 et la membrane déformable 14, pour diriger radialement et à l'écart de la zone centrale de membrane déformable 14 les gaz chauds issus du claquage non auto-cicatrisant. Dans le mode de réalisation représenté sur la figure 2, le moyen déflecteur 35 est un disque métallique de diamètre approprié supérieur à celui de la tige axiale cylindrique 34.

Une autre solution consiste à prévoir une membrane déformable 14 réalisée en métal, de sorte que les gaz chauds produits par le claquage non auto-cicatrisant ne risquent pas de la percer avant rupture de la partie cassable 11 de conducteur d'entrée.

Sur la figure 1, on a représenté deux modes de réalisation de la portion radiale 9 de conducteur électrique reliant la soudure 8 et la portion intermédiaire 160 de conducteur d'entrée. Selon le premier mode de réalisation, représenté en traits pleins, ladite portion radiale souple 9 de premier conducteur d'entrée comprend au moins une lame conductrice flexible de forte section, logée à l'interface entre la membrane déformable 14 et la première face 32 de paroi isolante solide 30. La lame conductrice flexible se raccorde par sa première extrémité à la tige axiale cylindrique 34, qui est alors métallique, et par sa seconde extrémité à une demi-boucle 36 de liaison avec la soudure excentrée 8 de connexion à la première électrode. La demi-boucle 36, noyée dans la résine de la paroi d'enceinte étanche 24, ne se déforme pas lors du fonctionnement du dispositif. Par contre, la portion de lame conductrice flexible située à l'interface entre la membrane déformable 14 et la première face 32 de paroi isolante solide 30 peut fléchir pour permettre le déplacement libre de la partie centrale de membrane déformable 14.

Selon un second mode de réalisation, représenté en pointillés sur la figure 1, la portion de conducteur souple reliant la soudure 8 et la portion intermédiaire 160 de conducteur d'entrée comprend une tresse souple 37 reliant la tige axiale cylindrique 34, elle-même également métallique, et un insert métallique 38 ménagé dans la partie centrale de seconde membrane 17. L'insert 38 est connecté électriquement à la soudure 8 par un conducteur 39 de forte section noyé dans la résine de la paroi 24.

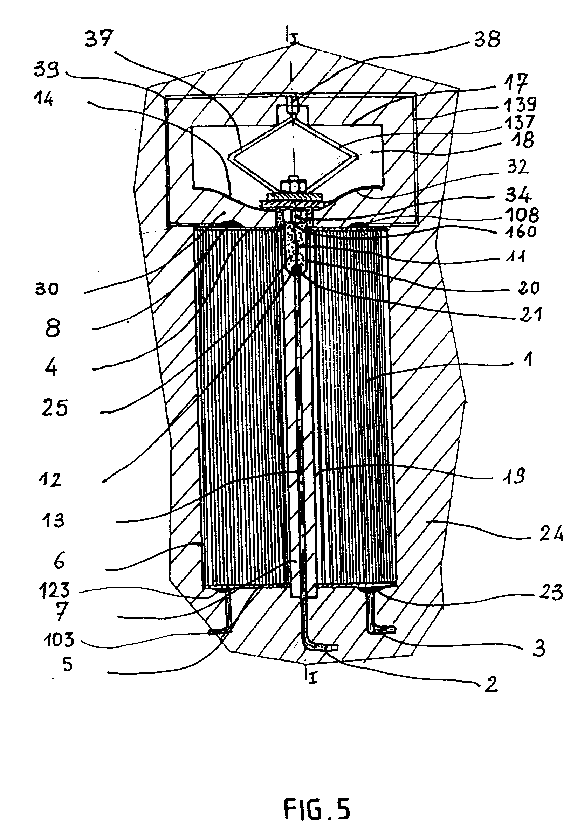

Le mode de réalisation représenté sur la figure 5 est similaire au second mode de réalisation de la figure 1, et en diffère par un agencement particulier des conducteurs. Cet agencement vise à réaliser une symétrie de l'élément de condensateur, ce qui réduit l'auto-inductance de l'élément. Ce mode de réalisation est ainsi adapté pour une utilisation en électronique de puissance, c'est-à-dire à des fréquences élevées de l'ordre d'une dizaine de kilohertz. Selon cet agencement particulier des conducteurs, la première électrode de l'élément 1 comprend deux premières soudures de connexion 8 et 108 diamétralement opposées par rapport à l'axe longitudinal I-I de l'élément 1 et connectées à un Insert métallique central 38 par deux conducteurs 39 et 139 respectifs de forte section symétriquement opposés et noyés dans la résine de la paroi 24. L'insert 38 est placé dans la partie centrale de seconde membrane 17, selon l'axe longitudinal I-I de l'élément 1. L'insert 38 est connecté à la tige axiale cylindrique 34 de conducteur d'entrée par deux tresses souples 37 et 137 symétriquement opposées de part et d'autre de l'axe longitudinal I-I. La seconde électrode de l'élément 1 comprend deux secondes soudures de connexion 23 et 123 diamétralement opposées par rapport à l'axe longitudinal I-I et connectées à deux branches respectives 3 et 103 de second conducteur d'entrée.

Dans les trois modes de réalisation, on entend par conducteur de "forte section" un conducteur dont la section est nettement plus grande que celle de la partie cassable 11 de conducteur d'entrée. Dans les applications visées, on utilisera de préférence un tel conducteur "de forte section" dont la section est telle que la densité de courant à l'intérieur du conducteur est inférieure à 4 ampères par millimètre carré.

Lors de la fabrication, on prévoit avantageusement d'enrober avec une pellicule antiadhérente à base de silicone ou de graisse silicone diélectrique la face latérale 6 de l'élément 1, la face latérale de la tige axiale cylindrique 34, ainsi que la face accessible de membrane déformable 14. On évite ainsi le collage desdites faces à la paroi isolante solide 30. La face d'extrémité 4 de l'élément 1 est normalement métallisée par projection de particules de zinc fondu, et présente donc une porosité généralement suffisante pour le passage des gaz sans nécessiter de couche de graisse silicone.

La partie cassable 11 de conducteur d'entrée peut être constituée d'un fil fusible de section adaptée pour fondre sous l'action d'une surintensité déterminée, et également adaptée pour se briser sous l'action d'une force de traction déterminée.

Cependant, on pourra avantageusement utiliser une partie cassable 11 sous forme d'une languette plate telle que représentée sur la figure 3, munie d'encoches latérales définissant une zone rétrécie 40 constituant une amorce de rupture. Une telle forme de partie cassable 11 de conducteur d'entrée permet de passer des intensités de l'ordre de deux fois le courant nominal en permanence sans échauffement supplémentaire.

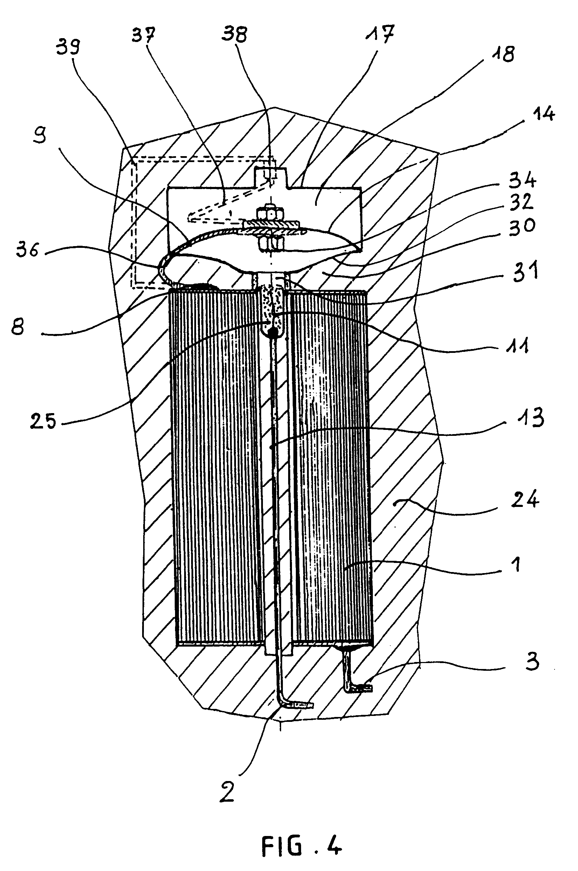

Le fonctionnement du dispositif est le suivant : en position de fonctionnement normal, représenté sur la figure 1, la membrane 14 est en appui sur la première face d'extrémité 4 ou, de préférence, sur la collerette 22 de la pièce d'extrémité 20, la partie cassable 11 de conducteur d'entrée étant sous tension mécanique faible ou nulle. Lorsqu'il se produit des claquages partiels non auto-cicatrisants de l'élément 1 à enroulement cylindrique, des dégagements gazeux interviennent par décomposition des matières constituant l'élément 1 au voisinage de la zone de claquage ; les gaz produits tendent à augmenter la pression dans le compartiment formé par l'élément 1, et à repousser la membrane 14 en direction de la seconde membrane 17, comprimant l'air contenu dans le compartiment 18. Le déplacement de la membrane 14 s'effectue à l'encontre de l'effort de retenue exercé par la partie cassable 11 de conducteur d'entrée. Lorsque la pression des gaz devient suffisante et dépasse un seuil déterminé, la force de traction exercée sur la partie cassable 11 de conducteur d'entrée produit sa rupture, et le dispositif passe dans un état tel que représenté sur la figure 4. Dans cet état, la partie cassable 11 s'est brisée, et le diélectrique pâteux 25 sépare les deux extrémités libres de partie cassable 11, évitant l'apparition d'un réamorçage par arc électrique entre ces deux extrémités.

Les gaz produits par la décomposition d'une portion de l'élément 1 à enroulement cylindrique lors d'un claquage non auto-cicatrisant s'échappent de l'élément 1 en longeant les bords de l'élément 1, s'écoulent entre la première face d'extrémité 4 de l'élément 1 et la seconde face 33 de la paroi isolante solide 30, traversent la cheminée axiale cylindrique 31 autour de la tige axiale cylindrique 34, et s'accumulent entre la première face 32 de paroi isolante solide 30 et la membrane déformable 14 en repoussant ladite membrane à l'écart de l'élément 1 à enroulement cylindrique.

La structure particulière selon la présente invention permet de faciliter le maintien des différents éléments lors de la coulée de la résine formant la paroi extérieure 24. En effet, la zone destinée à former la paroi isolante solide 30 est une zone libre avant coulée de la résine. Il est ainsi possible d'insérer dans cette zone des moyens support permettant de centrer la capsule 14, 17, 18 et de maintenir l'extrémité correspondante de l'élément 1 à enroulement cylindrique. L'élément 1 à enroulement cylindrique peut être disposé selon un axe I-I sensiblement horizontal, dans un moule de coulée. Un même moule de coulée permet ainsi de couler de la résine autour d'un nombre variable d'éléments de condensateur. Un même moule permet donc de réaliser des ensembles d'éléments de condensateur comportant un plus ou moins grand nombre d'éléments, la résine étant coulée jusqu'à affleurer la paroi supérieure des éléments introduits dans le moule.

La présente invention n'est pas limitée aux modes de réalisation qui ont été explicitement décrits, mais elle en inclut les diverses variantes et généralisations contenues dans le domaine des revendications ci-après.

## Revendications

1. Condensateur basse tension de puissance auto-protégé,
- comprenant au moins un élément (1) à enroulement cylindrique axial de couches isolantes et de couches conductrices de l'électricité formant une première et une seconde électrodes de type auto-cicatrisant isolées l'une de l'autre,
- la première électrode étant connectée électriquement à un premier conducteur d'entrée (2) du condensateur,
- la seconde électrode étant connectée électriquement à un second conducteur d'entrée (3) du condensateur,
- l'élément (1) à enroulement cylindrique étant inséré dans une enceinte étanche (24), les conducteurs d'entrée (2, 3) traversant de manière étanche la paroi de l'enceinte,
- une membrane déformable (14) transversale divisant l'espace intérieur de l'enceinte en deux compartiments, un premier compartiment contenant l'élément (1) à enroulement cylindrique d'électrodes, un second compartiment (18) contenant un gaz tel que l'air, la membrane déformable (14) étant susceptible de se déformer et de se déplacer axialement sous l'action de la pression des gaz produits par la décomposition d'une portion de l'élément (1) à enroulement cylindrique en cas de claquage non auto-cicatrisant,
- la membrane déformable (14) étant reliée mécaniquement à une portion intermédiaire (160) du premier conducteur d'entrée (2) pour provoquer le déplacement de ladite portion intermédiaire (160) du conducteur lors de la déformation de la membrane,
- une partie cassable (11) de premier conducteur d'entrée (2) étant tendue entre un point fixe (12) disposé à l'intérieur du premier compartiment et la portion intermédiaire (160) de conducteur reliée mécaniquement à la membrane (14) déformable, de sorte que la déformation de membrane produit une tension de la partie cassable (11) de conducteur d'entrée, ladite partie cassable présentant une résistance mécanique limitée telle qu'elle se rompt sous l'action d'une tension supérieure à un seuil de traction déterminé,
- la partie cassable (11) de conducteur d'entrée étant logée dans un compartiment empli d'un diélectrique pâteux (25) évitant le réamorçage électrique après rupture de la partie cassable (11),
caractérisé en ce que :
- la membrane déformable (14) est disposée à l'écart dudit élément (1) à enroulement cylindrique d'électrodes, en appui sur la première face (32) d'une paroi isolante solide (30) solidaire de ladite enceinte étanche (24) et munie d'une cheminée axiale cylindrique (31), la seconde face (33) de ladite paroi isolante solide (30) étant en appui sur une face d'extrémité (4) dudit élément (1) à enroulement cylindrique d'électrodes,
- la membrane déformable (14) est reliée mécaniquement à ladite portion intermédiaire (160) de premier conducteur d'entrée par une tige axiale cylindrique (34) coulissant à faible jeu dans ladite cheminée axiale cylindrique (31), ladite tige axiale cylindrique (34) ayant une longueur au moins égale à celle de ladite cheminée axiale cylindrique (31),
- ladite portion intermédiaire (160) de premier conducteur d'entrée est reliée à ladite première électrode par une portion radiale souple (9) de premier conducteur d'entrée,
de sorte que les gaz produits par la décomposition d'une portion de l'élément (1) à enroulement cylindrique lors d'un claquage non auto-cicatrisant s'échappent en longeant les bords de l'élément (1) à enroulement cylindrique, s'écoulent entre ladite face d'extrémité (4) de l'élément (1) à enroulement cylindrique et la seconde face (33) de ladite paroi isolante solide (30), traversent la cheminée axiale cylindrique (31) autour de ladite tige axiale cylindrique (34) et s'accumulent entre la première face (32) de paroi isolante solide (30) et la membrane déformable (14) en repoussant ladite membrane déformable (14) à l'écart de l'élément (1) à enroulement cylindrique.

2. Condensateur selon la revendication 1, caractérisé en ce que la membrane déformable (14) est réalisée en métal.

3. Condensateur selon la revendication 1, caractérisé en ce que :
- la membrane déformable (14) est réalisée en une matière plastique flexible,
- la tige cylindrique axiale (34) est métallique,
- la tige cylindrique axiale (34) est solidaire d'un moyen déflecteur (35) disposé entre la sortie de la cheminée cylindrique axiale (31) et la membrane déformable (14) pour diriger radialement et à l'écart de la zone centrale de membrane déformable (14) les gaz chauds issus du claquage non auto-cicatrisant.

4. Condensateur selon la revendication 3, caractérisé en ce que le moyen déflecteur (35) est un disque métallique de diamètre supérieur à celui de la tige axiale cylindrique (34).

5. Condensateur selon l'une quelconque des revendications 1 à 4, caractérisé en ce que, avant claquage non auto-cicatrisant, la tige axiale cylindrique (34) porte directement ou indirectement par son extrémité libre contre ladite face d'extrémité (4) dudit élément (1) à enroulement cylindrique.

6. Condensateur selon l'une quelconque des revendications 1 à 5, caractérisé en ce que :
- l'élément (1) à enroulement cylindrique comporte un canal axial traversant (7) traversé par le premier conducteur d'entrée (2), le premier conducteur d'entrée (2) comprenant un conducteur de forte section (13) axial dont l'extrémité (12) occupe une position intermédiaire dans le canal axial (7) et forme le point fixe auquel est solidarisée une première extrémité de la partie cassable (11) de conducteur d'entrée,
- la partie cassable (11) de conducteur d'entrée est solidarisée par sa seconde extrémité à l'extrémité libre de la tige axiale cylindrique,
- un diélectrique pâteux (25) est disposé dans la portion de canal axial (7) contenant la partie cassable (11) de conducteur d'entrée.

7. Condensateur selon la revendication 6, caractérisé en ce que la membrane déformable (14) est associée à une seconde membrane (17) formant avec elle une capsule étanche (14, 17, 18) remplie d'un gaz tel que l'air, l'épaisseur de la capsule (14, 17, 18) étant suffisante pour autoriser une déformation de membrane déformable (14) telle qu'elle assure la rupture de la partie cassable (11) de conducteur d'entrée.

8. Condensateur selon l'une quelconque des revendications 1 à 7, caractérisé en ce que la paroi d'enceinte (24) est réalisée en une résine diélectrique.

9. Condensateur selon la revendication 8, caractérisé en ce que la paroi isolante solide (30) est réalisée en cette même résine diélectrique.

10. Condensateur selon l'une quelconque des revendications 1 à 9, caractérisé en ce que ladite portion radiale souple (9) de premier conducteur d'entrée comprend au moins une lame conductrice flexible de forte section logée à l'interface entre la membrane déformable (14) et la première face (32) de paroi isolante solide (30), ladite lame conductrice se raccordant par sa première extrémité à la tige axiale cylindrique (34) elle-même métallique, et par sa seconde extrémité à une demi-boucle (36) de liaison avec une soudure excentrée (8) de connexion à la première électrode.

11. Condensateur selon l'une quelconque des revendications 1 à 9, caractérisé en ce que :
- la première électrode de l'élément (1) comprend deux premières soudures de connexion (8, 108) diamétralement opposées et connectées à un insert métallique (38) central par deux conducteurs (39, 139) respectifs symétriquement opposés,
- l'insert (38) est connecté à la tige axiale (34) par deux tresses souples (37, 137) symétriquement opposées,
- la seconde électrode de l'élément (1) comprend deux secondes soudures de connexion (23, 123) diamétralement opposées et connectées à deux branches respectives (3, 103) de second conducteur d'entrée.

12. Condensateur selon l'une quelconque des revendications 1 à 11, caractérisé en ce que le diélectrique pâteux est une graisse au silicone, et en ce qu'une pellicule de graisse au silicone enrobe les faces latérales (6) dudit élément (1) à enroulement cylindrique, la tige axiale cylindrique (34) et la face accessible de membrane déformable (14), évitant leur collage à la paroi isolante solide (30).

## Patentansprüche

1. Selbstgeschützter Niederspannung-Kondensator,
- bestehend aus wenigstens einem Element (1) mit einer axialen Zylinderwicklung aus Isolierschichten und für Strom leitfähigen Schichten, welche eine erste und eine zweite Elektrode des sich selbst vernarbenden Typs bilden, die gegenseitig isoliert sind, wobei
- die erste Elektrode mit einem ersten Eingangsleiter (2) des Kondensators elektrisch verbunden ist,
- die zweite Elektrode mit einem zweiten Eingangsleiter (3) des Kondensators elektrisch verbunden ist,
- das Element (1) mit der Zylinderwicklung in eine dichte Einfassung (24) eingesetzt ist, wobei die Eingangsleiter (2, 3) die Wand der Einfassung in einer dichten Art und Weise durchdringen,
- eine quer ausgerichtete verformbare Membrane (14) den Innenraum der Einfassung in zwei Abteile unterteilt, wobei ein erstes Abteil das Element (1) mit der Zylinderwicklung der Elektroden enthält, ein zweites Abteil (18) ein Gas wie bspw. Luft enthält und die verformbare Membrane (14) geeignet ist für eine Verformung und für eine axiale Ortsveränderung unter der Wirkung des Druckes der Gasprodukte durch die Zerlegung eines Abschnitts des Elements (1) mit der Zylinderwicklung im Falle eines nicht sich selbst vernarbenden Durchschlages,
- die verformbare Membrane (14) mit einem mittleren Abschnitt (160) des ersten Eingangsleiters (2) mechanisch verbunden ist, um die Ortsveränderung des mittleren Abschnitts (160) des Leiters bei der Verformung der Membrane zu bewirken,
- ein zerbrechliches Teil (11) des ersten Eingangsleiters (2) zwischen einem im Innern des ersten Abteils angeordneten Fixpunkt (12) und dem mit der verformbaren Membrane (14) mechanisch verbundenen mittleren Abschnitt (160) des Leiters derart gespannt ist, daß die Verformung der Membrane eine Spannung des zerbrechlichen Teils (11) des Eingangsleiters erzeugt, wobei das zerbrechliche Teil einen solchen begrenzten mechanischen Widerstand darbietet, daß es unter der Wirkung einer Spannung größer als eine bestimmte Zugschwelle zu Bruch geht,
- das zerbrechliche Teil (11) des Eingangsleiters in einem Abteil angeordnet ist, welches mit einem pastenförmigen Dielektrikum (25) aufgefüllt ist, das eine elektrische Wiederzündung nach dem Bruch des zerbrechlichen Teils (11) vermeidet,
dadurch gekennzeichnet, daß
- die verformbare Membrane (14) unabhängig von dem Element (1) mit der Zylinderwicklung der Elektroden angeordnet ist und sich abstützt auf der ersten Stirnseite (32) einer festen Isolierwand (30), die mit der dichten Einfassung (24) formschlüssig verbunden und mit einem axialen zylindrischen Auslaß (31) versehen ist, wobei sich die zweite Stirnseite (33) der festen Isolierwand (30) auf einer Endseite (4) des Elements (1) mit der Zylinderwicklung der Elektroden abstützt,
- die verformbare Membrane (14) mit dem mittleren Abschnitt (160) des ersten Eingangsleiters durch einen axialen zylindrischen Schaft (34) mechanisch verbunden ist, der in dem axialen zylindrischen Auslaß (31) mit schwachem Spiel gleitet, wobei der axiale zylindrische Schaft (34) eine Länge wenigstens gleich derjenigen des axialen zylindrischen Auslasses (31) hat,
- der mittlere Abschnitt (160) des ersten Eingangsleiters mit der ersten Elektrode durch einen biegsamen radialen Abschnitt (9) des ersten Eingangsleiters verbunden ist, derart, daß die durch die Zerlegung eines Abschnitts des Elements (1) mit der Zylinderwicklung bei einem nicht sich selbst vernarbenden Durchschlag erzeugten Gase entlang der Ränder des Elements (1) mit der Zylinderwicklung entweichen, sich zwischen der Endseite (4) des Elements (1) mit der Zylinderwicklung und der zweiten Strinseite (33) der festen Isolierwand (30) auseinanderströmen, den axialen zylindrischen Auslaß (31) um den axialen zylindrischen Schaft (34) herum durchdringen und sich zwischen der ersten Stirnseite (32) der festen Isolierwand (30) und der verformbaren Membrane (14) sammeln, um die verformbare Membrane (14) unabhängig von dem Element (1) mit der Zylinderwicklung wegzustoßen.

2. Kondensator nach Anspruch 1, dadurch gekennzeichnet, daß die verformbare Membrane (14) aus Metall verwirklicht ist.

3. Kondensator nach Anspruch 1, dadurch gekennzeichnet, daß:
- die verformbare Membrane (14) aus einem flexiblen Kunststoffmaterial verwirklicht ist,
- der axiale zylindrische Schaft (34) metallisch ist,
- der axiale zylindrische Schaft (34) mit einem Ablenkmittel (35) formschlüssig verbunden ist, welches zwischen dem Ausgang des axialen zylindrischen Auslasses (31) und der verformbaren Membrane (14) angeordnet ist, um die warmen Gase, die von dem nicht sich selbst vernarbenden Durchschlag resultieren, radial und unabhängig von der zentralen Zone der verformbaren Membrane (14) zu lenken.

4. Kondensator nach Anspruch 3, dadurch gekennzeichnet, daß das Ablenkmittel (35) eine Metallscheibe mit einem Durchmesser größer als derjenige des axialen zylindrischen Schaftes (34) ist.

5. Kondensator nach einem der Ansprüche 1 bis 4, dadurch gekennzeichnet, daß vor dem nicht sich selbst vernarbenden Durchschlag der axiale zylindrische Schaft (34) direkt oder indirekt mit seinem freien Ende gegen die Endseite (4) des Elements (1) mit der Zylinderwicklung anliegt.

6. Kondensator nach einem der Ansprüche 1 bis 5, dadurch gekennzeichnet, daß:
- das Element (1) mit der Zylinderwicklung einen axialen Durchdringungskanal (7) aufweist, der von dem ersten Eingangsleiter (2) durchdrungen ist, wobei der erste Eingangsleiter (2) einen axialen Leiter (13) mit starkem Querschnitt aufweist, dessen Ende (12) eine mittlere Position in dem axialen Kanal (7) einnimmt und den Fixpunkt bildet, mit welchem ein erstes Ende des zerbrechlichen Teils (11) des Eingangsleiters formschlüssig verbunden ist,
- das zerbrechliche Teil (11) des Eingangsleiters mit seinem zweiten Ende mit dem freien Ende des axialen zylindrischen Schafts formschlüssig verbunden ist,
- ein pastenförmiges Dielektrikum (25) in dem Abschnitt des axialen Kanals (7) angeordnet ist, der das zerbrechliche Teil (11) des Eingangsleiters enthält.

7. Kondensator nach Anspruch 6, dadurch gekennzeichnet, daß die verformbare Membrane (14) mit einer zweiten Membrane (17) verbunden ist, die mit ihr eine dichte Kapsel (14, 17, 18) bildet, die mit einem Gas wie bspw. Luft gefüllt ist, wobei die Dicke der Kapsel (14, 17, 18) ausreichend ist, um eine solche Verformung der verformbaren Membrane (14) zu ermöglichen, daß sie das Brechen des zerbrechlichen Teils (11) des Eingangsleiters versichert.

8. Kondensator nach einem der Ansprüche 1 bis 7, dadurch gekennzeichnet, daß die Einfassungswand (24) mit einem dielektriktrischen Harz verwirklicht ist.

9. Kondensator nach Anspruch 8, dadurch gekennzeichnet, daß die feste Isolierwand (30) aus demselben dielektrischen Harz verwirklicht ist.

10. Kondensator nach einem der Ansprüche 1 bis 9, dadurch gekennzeichnet, daß der biegsame radiale Abschnitt (9) des ersten Eingangsleiters aus wenigstens einem flexiblen leitfähigen Streifen mit einem starken Querschnitt besteht, der an der Grenzfläche zwischen der verformbaren Membrane (14) und der ersten Stirnseite (32) der festen Isolierwand (30) angeordnet ist, wobei der leitfähige Streifen mit seinem ersten Ende mit dem axialen zylindrischen und ebenfalls metallischen Schaft (34) zusammenpaßt und mit seinem zweiten Ende mit einer Halbschleife (36) der Verbindung mit einer versetzten Schweißnaht (8) der Verbindung mit der ersten Elektrode.

11. Kondensator nach einem der Ansprüche 1 bis 9, dadurch gekennzeichnet, daß:
- die erste Elektrode des Elements (1) zwei erste Verbindungsschweißnähte (8, 108) aufweist, die sich diametral gegenüberliegen und mit einem zentralen metallischen Einsatz (38) durch zwei betreffende Leiter (39, 139) verbunden sind, die sich symmetrisch gegenüberliegen,
- der Einsatz (38) mit dem axialen Schaft (34) durch zwei biegsame Geflechte (37, 137) verbunden ist, die sich symmetrisch gegenüberliegen,
- die zweite Elektrode des Elements (1) zwei zweite Verbindungsschweißnähte (23, 123) aufweist, die sich diametral gegenüberliegen und mit zwei betreffenden Zweigen (3, 103) des zweiten Eingangsleiters verbunden sind.

12. Kondensator nach einem der Ansprüche 1 bis 11, dadurch gekennzeichnet, daß das pastenförmige Dielektrikum ein Silikonfett ist, und daß ein Silikonfettüberzug die Seitenflächen (6) des Elements (1) mit der Zylinderwicklung, den axialen zylindrischen Schaft (34) und die zugängliche Seite der verformbaren Membrane (14) umhüllt, um deren Verklebung mit der festen Isolierwand (30) zu vermeiden.

## Claims

1. Low-voltage power capacitor with self protection, comprising at least one cylindrical axially wound element (1) of electrically insulating and electrically conducting layers forming first and second self-sealing type electrodes which are insulated from each other,
- the first electrode being connected electrically to a first input conductor (2) of the capacitor,
- the second electrode being connected electrically to a second input conductor (3) of the capacitor,
- the cylindrical wound element (1) being inserted into an impervious casing (24), the input conductors (2, 3) passing through the wall of the casing in an impervious manner,
- a deformable transverse membrane (14) dividing the interior space of the casing into two compartments, a first compartment containing the cylindrical wound electrode element (1), a second compartment (18) containing a gas such as air, the deformable membrane (14) being able to be deformed and moved axially under the action of the pressure of the gases produced by the decomposition of a portion of the cylindrical wound element (1) in the event of non-self-sealing breakdown,
- the deformable membrane (14) being connected mechanically to an intermediate section (160) of the first input conductor (2) to bring about displacement of said intermediate section (160) of the conductor during deformation of the membrane,
- a breakable section (11) of the first input conductor (2) being stretched between a fixed point (12) arranged in the interior of the first compartment and the intermediate section (160) of the conductor connected mechanically to the deformable membrane (14) in such a way that deformation of the membrane produces a tension in the breakable section (11) of the input conductor, said breakable section having a limited mechanical resistance so that it breaks under the action of a tension greater than the predetermined traction threshold,
- the breakable section (11) of the input conductor being accommodated in a compartment filled with a dielectric paste (25) preventing electrical reconnection after rupture of the breakable section (11),
characterised in that:
- the deformable membrane (14) is arranged apart from said cylindrical wound electrode element (1), supported on the first surface (32) of a solid insulating wall (30) integral with said impervious casing (24) and provided with a cylindrical axial vent (31), the second surface (33) of said solid insulating wall (30) being supported on an end face (4) of said cylindrical wound electrode element (1),
- the deformable membrane (14) is connected mechanically to said intermediate section (160) of the first input conductor by a cylindrical axial rod (34) sliding with a small degree of play within said cylindrical axial vent (31), said cylindrical axial rod (34) having a length at least equal to that of said cylindrical axial vent (31),
- said intermediate section (160) of the first input conductor is connected to said first electrode by a flexible radial section (9) of the first input conductor,
in such a way that the gases produced by the decomposition of a portion of the cylindrical wound element (1) during non-self-sealing breakdown escape by passing along the sides of the cylindrical wound element (1), flowing out between said end face (4) of the cylindrical wound element (1) and the second surface (33) of said solid insulating wall (30), traversing the axial cylindrical vent (31) around said axial cylindrical rod (34) and accumulating between the first surface (32) of the solid insulating wall (30) and the deformable membrane (14) and pushing back said deformable membrane (14) into the space of the cylindrical wound element (1).

2. Capacitor according to claim 1, characterised in that the deformable membrane (14) is made of metal.

3. Capacitor according to claim 1, characterised in that:
- the deformable membrane (14) is made of a flexible plastic material,
- the cylindrical axial rod (34) is metallic,
- the cylindrical axial rod (34) is firmly connected to deflecting means (35) arranged between the outlet of the cylindrical axial vent (31) and the deformable membrane (14) to direct radially and to the space of the central zone of the deformable membrane (14) the hot gases emitted from non-self-sealing breakdown.

4. Capacitor according to claim 3, characterised in that the deflector means (35) consists of a metal disk with a diameter greater than that of the cylindrical axial rod (34).

5. Capacitor according to any one of claims 1 to 4, characterised in that, before non-self-sealing breakdown, the cylindrical axial rod (34) is supported directly or indirectly by way of its free end against said end face (4) of said cylindrical wound element (1).

6. Capacitor according to any one of claims 1 to 5, characterised in that:
- the cylindrical wound element (1) includes an axial through passage (7) traversed by the first input conductor (2), the first input conductor (2) comprising a conducter (13) of large axial cross section the end (12) of which occupies an intermediate position in the axial passage (7) and forms the fixed point to which a first end of the breakable section (11) of the input conductor is connected,
- the breakable section (11) of the input conductor is connected via its second end to the free end of the cylindrical axial rod,
- a dielectric paste (25) is arranged in the section of the axial passage (7) containing the breakable section (11) of the input conductor.

7. Capacitor according to claim 6, characterised in that the deformable membrane (14) is connected to a second membrane (17) forming together with it a sealed capsule (14, 17, 18) filled with a gas such as air, the depth of said capsule (14, 17, 18) being sufficient to allow deformation of the deformable membrane (14) such that it assures rupture of the breakable section (11) of the input conductor.

8. Capacitor according to any one of claims 1 to 7, characterised in that the casing wall (24) is made of a dielectric resin.

9. Capacitor according to claim 8, characterised in that the solid insulating wall (30) is made of this same dielectric resin.

10. Capacitor according to any one of claims 1 to 9, characterised in that said flexible radial section (9) of the first input conductor comprises at least one flexible conducting blade with a large cross section located at the interface between the deformable membrane (14) and the first surface (32) of the solid insulating wall (30), said conducting blade being connected by its first end to the cylindrical axial rod (34) itself metallic, and by its second end to a connecting half loop (36)
with an eccentric connection weld (8) to the first electrode.

11. Capacitor according to any one of claims 1 to 9, characterised in that:
- the first electrode of the element (1) includes two first connection welds (8, 108) which are diametrically opposed and connected to a central metallic insert (38) by two respective symmetrically opposed conductors (39, 139),
- the insert (38) is connected to the axial rod (34) by means of two symmetrically opposed flexible braids (37, 137),
- the second electrode of the element (1) includes two second connection welds (23, 123) which are diametrically opposed and connected to two respective arms (3, 103) of the second input conductor.

12. Capacitor according to any one of claims 1 to 11, characterised in that the dielectric paste is a silicone grease, and in that a film of silicone grease covers the lateral surfaces (6) of said cylindrical wound element (1), the cylindrical axial rod (34) and the accessible surface of the deformable membrane (14), preventing their sticking to the solid insulating wall (30).
